# EUROPEAN PATENT APPLICATION

(11) **EP 1 645 594 A1**
(43) Date of publication of application: **12.04.2006**
(21) Application number: 04746935.8
(22) Date of filing: 28.06.2004
(51) Int. Cl.: C08L 61/06, C08K 3/22, C08L 61/34

(54) **PHENOL RESIN COMPOSITION**

(30) Priority: 10.07.2003 JP 2003195087; 10.03.2004 JP 2004067100
(71) Applicant: Asahi Organic Chemicals Industry Co., Ltd., Nobeoka-shi, Miyazaki 882-8688 (JP)
(72) Inventor: MATSUMOTO, Yasuhiro, Asahi Organic C. Ind. Co. Ltd, Fuso, Niwa-gun, Aichi 480-0105 (JP); INATOMI, Shigeki, Asahi Organic C. Ind. Co. Ltd., Fuso, Niwa-gun, Aichi 480-0105 (JP)
(74) Representative: Patentanwälte Ruff, Wilhelm, Beier, Dauster & Partner
(86) International application number: PCT/JP2004/009466
(87) International publication number: WO 2005/005541

(57) **Abstract**

The present invention relates to a phenol resin composition comprising a phenol resin and boehmite having an average particle diameter (minor diameter) of 100 nm or less, and a phenol resin composition further comprising a benzooxazine resin in a weight ratio of the phenol resin to the benzooxazine resin within a range from 95/5 to 25/75. In a specific aspect, the phenol resin composition of the present invention is **characterized in that** it contains boehmite having an aspect ratio within a range from 1 to 100 and also contains an alumina-based compound as a filler, an amount of the boehmite being from 1 to 150 parts by weight based on 100 parts by weight of the phenol resin.

## Description

### TECHNICAL FIELD

The present invention relates to a phenol resin composition which is excellent in thermal conductivity and mechanical strength and, more particularly, to a resin composition containing a phenol resin and a benzooxazine resin, which is excellent in thermal conductivity and mechanical strength and is also excellent in workability and moldability.

### BACKGROUND ART

A phenol resin composition has conventionally been used for electrical and electronic components as well as automobile components because it is excellent in heat resistance, mechanical strength and dimensional stability. In these fields, there arose a problem that components themselves generate heat and performances deteriorate when used in a high temperature atmosphere, and thus it has been required to enhance the thermal conductivity of the material.

To solve the problem, there has been proposed a method of improving the thermal conductivity of the material by using graphite and carbon fibers as a filler. However, there arose a problem that these base materials have conductivity and cause drastic deterioration of insulation resistance and, therefore, are unsuited for electrical and electronic components. A large amount of base materials having high thermal conductivity such as silica and alumina powders may have been used as the filler. However, these base materials must be used so as to enhance the thermal conductivity and, as a result, there arose a problem that the mechanical strength decreases (Japanese Unexamined Patent Publication (Kokai) No. 2002-220507).

Fibrous fillers including glass fibers, which have conventionally been added so as to improve mechanical properties and heat resistance of a resin composition, had a problem such as difference in properties, particularly linear expansion coefficient, between molded article obtained in a flow direction during molding and a molded article obtained in a direction perpendicular to the flow direction (anisotropy). It is known to use, as the filler for solving the problem, boehmite having an external size of 0.5 to 15 µm (500 nm to 1500 nm) and an aspect ratio of 10 to 100 and to use a phenol resin as the resin (Japanese Unexamined Patent Publication (Kokai) No. 2001-261976). However, thermal conductivity, mechanical strength, kneading workability and moldability of these compositions remain to be improved.

Also there arose a problem that fluidity of the material deteriorates to thereby impair kneading workability and moldability, and thus there has been made a trial of securing fluidity of the material by using a benzooxazine resin, which has low melt viscosity before curing and is excellent in fluidity, as compared with a conventional phenol resin (Japanese Unexamined Patent Publication (Kokai) No. Hei 11-071498 and Japanese Unexamined Patent Publication (Kokai) No. 2001-064480). However, when the benzooxazine resin is used, the resulting resin composition has insufficient mechanical strength and a resin composition having better performances have been required.

### DISCLOSURE OF THE INVENTION

An object of the present invention is to provide a phenol resin composition which is excellent in thermal conductivity and mechanical strength.

Another object of the present invention is to provide a (thermosetting) resin composition which is excellent in thermal conductivity and mechanical strength, and also contains a phenol resin and a benzooxazine resin which are excellent in kneading workability and moldability.

The present inventors have intensively studied to achieve the objects described above and found that a phenol resin composition having excellent thermal conductivity and mechanical strength can be obtained by mixing the phenol resin with boehmite having a specific particle diameter. Thus the present invention has been completed based on this finding.

Furthermore, the present inventors have intensively studied about the phenol resin composition so as to improve characteristics of the resin composition and found that a resin composition, which is excellent in thermal conductivity and mechanical strength, and also contains a phenol resin and a benzooxazine resin which are excellent in kneading workability and moldability, can be obtained by mixing a resin mixture of a phenol resin and a benzooxazine resin with boehmite having a specific particle diameter. Thus, an improved invention of the present invention has been completed.

That is, the phenol resin composition of the present invention comprises a phenol resin and boehmite having an average particle diameter (minor diameter) of 100 nm or less.

The resin composition containing a phenol resin and a benzooxazine resin of the present invention comprises a phenol resin and a benzooxazine resin in a weight ratio within a range from 95/5 to 25/75, and further comprises boehmite having an average particle diameter (minor diameter) of 100 nm or less.

### EFFECT OF THE INVENTION

The phenol resin composition of the present invention has mechanical strength and thermal conductivity improved by mixing with boehmite having an average particle diameter (minor diameter) of 100 nm or less, as compared with a conventional phenol resin composition, and is therefore preferably used for mechanical components, laminates and sheet materials, including molding materials for electrical and electronic components such as semiconductor sealing materials as well as molding materials for automobile components.

The resin composition containing a phenol resin and a benzooxazine resin of the present invention, which is excellent in mechanical strength and thermal conductivity and is also excellent in workability and moldability, is obtained by using a phenol resin and a benzooxazine resin in combination as a thermosetting resin and further adding boehmite having an average particle diameter (minor diameter) of 100 nm or less, and is therefore preferably used for mechanical components, laminates and sheet materials, including molding materials for electrical and electronic components such as semiconductor sealing materials as well as molding materials for automobile components.

In the present invention, a novolak type phenol resin and a resol type phenol resin are used as the phenol resin and these resins are used alone or in combination. Among these resins, a novolak type phenol resin is preferably used. In this case, as a curing agent, hexamethylenetetramine is used in an amount of about 5 to 40 parts by weight based on 100 parts by weight of the novolak resin.

The boehmite used in the present invention is an inorganic compound represented by the general formula: AlO(OH) which contains at least 90% or more aluminum hydroxide oxide. In the present invention, fine boehmite having an average particle diameter (minor diameter) of 100 nm or less is used. The average particle diameter is preferably from 1 to 100 nm, more preferably from 5 to 50 nm, and most preferably from 10 to 20 nm. The shape of the boehmite is not specifically limited and those having various shapes such as spherical, flat, acicular, cylindrical and amorphous are used. In view of availability and an increase in mechanical strength, acicular or cylindrical boehmite is preferable. Furthermore, an aspect ratio (= average particle diameter of major diameter/average particle diameter of minor diameter) is preferably from 1 to 100, and more preferably from 5 to 50. In the present invention, boehmite having a size of 100 nanometers or less is referred to as "nanoalumina".

The amount of the nanoalumina in the present invention is appropriately decided according to the required physical properties and applications of the phenol resin composition, but is preferably from 1 to 150 parts by weight, and more preferably from 5 to 100 parts by weight, based on 100 parts by weight of the phenol resin. It is not preferable that the amount is less than 1 part by weight because performances such as mechanical strength and thermal conductivity are not sufficiently exhibited. It is not preferable that the amount is more than 150 parts by weight because fluidity deteriorates and thus it becomes difficult to perform kneading or molding.

In the present invention, when the composition further contains a benzooxazine resin, the amount of the nanoalumina is appropriately decided according to required physical properties and applications of the resin composition containing a phenol resin and a benzooxazine resin, but is preferably from 1 to 150 parts by weight, and more preferably from 5 to 100 parts by weight, based on 100 parts by weight the total amount of the phenol resin and the benzooxazine resin. It is not preferable that the amount is less than 1 part by weight because performances such as mechanical strength and thermal conductivity are not sufficiently exhibited. It is not preferable that the amount is more than 150 parts by weight because fluidity deteriorates and thus it becomes difficult to perform kneading or molding.

In the thermosetting resin composition containing a phenol resin and a benzooxazine resin of the present invention, a weight ratio of the phenol resin to the benzooxazine resin is within a range from 95/5 to 25/75. Preferably, the weight ratio is from 90/10 to 30/70. When the proportion of the phenol resin is more than the above range, kneading workability tends to become inferior. On the other hand, when the proportion of the phenol resin is less than the above range, the mechanical strength tends to decrease.

Examples of the benzooxazine resin used in the present invention include thermosetting resins having a dihydrobenzooxazine ring in the molecule, for example, compounds represented by the following general formulas (1) to (4): 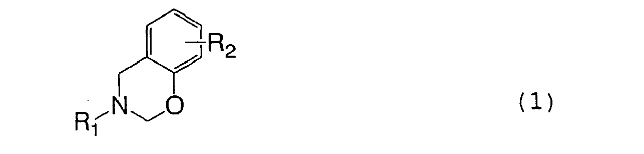 wherein R₁ represents alkyl group which may have a substituent, an aryl group which may have a substituent, an alkenyl group which may have a substituent, an alkynyl group which may have a substituent or an aralkyl group which may have a substituent; and R₂ represents a hydrogen group, or an alkyl group which may have a substituent, an aryl group which may have a substituent, an alkoxy group which may have a substituent, an alkenyl group which may have a substituent, an alkynyl group which may have a substituent, an aralkyl group which may have a substituent, or those in which a halogen atom, a nitro group, a cyano group, an alkoxycarbonyl group, a hydroxyl group or an alkyl(aryl)sulfonyl group is monosubstituted, disubstituted, trisubstituted or tetrasubstituted; 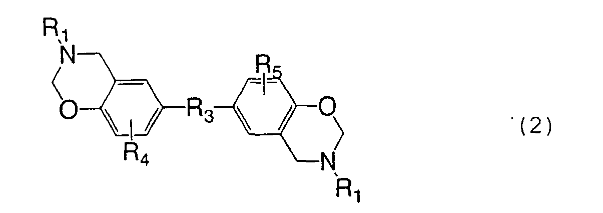 in the general formula (2), R₁ represents an alkyl group which may have a substituent, an aryl group which may have a substituent, an alkenyl group which may have a substituent, an alkynyl group which may have a substituent or an aralkyl group which may have a substituent; R₃ represents a single bond or alkylene group which may have a substituent, an arylene group which may have a substituent, an alkenylene group which may have a substituent, an alkynylene group which may have a substituent, an aralkylene group which may have a substituent, or a carbonyl group, an ether group, a thioether group, a silylene group, a siloxane group, a methylene ether group, an ester group or a sulfonyl group; and R₄ and R₅ are the same or different and represent a hydrogen group, or an alkyl group which may have a substituent, an aryl group which may have a substituent, an alkoxy group which may have a substituent, an alkenyl group which may have a substituent, an alkynyl group which may have a substituent, an aralkyl group which may have a substituent, or those in which a halogen atom, a nitro group, a cyano group, an alkoxycarbonyl group, a hydroxyl group or an alkyl(aryl)sulfonyl group is monosubstituted, disubstituted or trisubstituted; 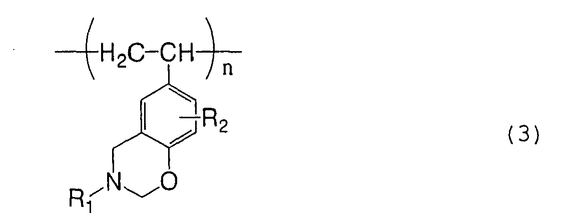 in the general formula (3), R₁ represents an alkyl group which may have a substituent, an aryl group which may have a substituent, an alkenyl group which may have a substituent, an alkynyl group which may have a substituent or an aralkyl group which may have a substituent; R₂ represents a hydrogen group, or an alkyl group which may have a substituent, an aryl group which may have a substituent, an alkoxy group which may have a substituent, an alkenyl group which may have a substituent, an alkynyl group which may have a substituent, an aralkyl group which may have a substituent, or a halogen atom, a nitro group, a cyano group, an alkoxycarbonyl group, a hydroxyl group or an alkyl(aryl)sulfonyl group; and n represents an integer of 2 to 200; and 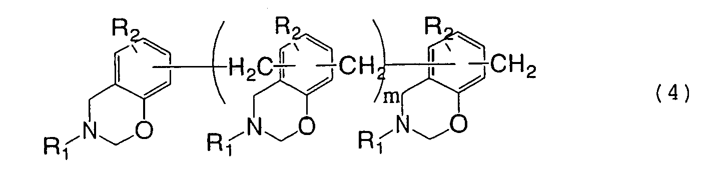 in the general formula (4), R₁ represents an alkyl group which may have a substituent, an aryl group which may have a substituent, an alkenyl group which may have a substituent, an alkynyl group which may have a substituent or an aralkyl group which may have a substituent; R₂ represents a hydrogen group, or an alkyl group which may have a substituent, an aryl group which may have a substituent, an alkoxy group which may have a substituent, an alkenyl group which may have a substituent, an alkynyl group which may have a substituent, an aralkyl group which may have a substituent, or a halogen atom, a nitro group, a cyano group, an alkoxycarbonyl group, a hydroxyl group or an alkyl(aryl)sulfonyl group; and m represents an integer of 0 to 100.

In the present invention, a compound represented by the general formula (2), which exhibits fluidity when uncured and is excellent in physical and mechanical properties after curing, is particularly preferable.

The phenol resin composition of the present invention (or the resin composition containing a phenol resin and a benzooxazine resin) is mixed with various fillers such as inorganic and organic fillers, if necessary.

Examples of the inorganic filler include calcium carbonate, barium sulfate, calcium sulfate, silica, perlite, shirasu balloon, diatomaceous earth, alumina-based compound, calcium silicate, talc, glass fibers, carbon fibers, boron fibers, silicon carbide fibers and potassium titanate fibers. Examples of the organic filler include wood flour, plywood flour, thermosetting resin cured article powder, aramid fibers, ground cloth, pulp, rubber and cashew dust.

In the present invention, an alumina-based compound is preferable among these fillers. Examples of the alumina-based compound are compounds containing an Al₂O₃ component such as kaolin, clay, mica, aluminum borate, vermiculite and smectite, including alumina. Among these compounds, alumina is particularly preferable.

The amount of these fillers is not specifically limited, but is preferably from 10 to 500 parts by weight, and more preferably from 100 to 400 parts by weight, based on 100 parts by weight of the phenol resin.

When the phenol resin composition of the present invention contains a benzooxazine resin, the amount of the filler is preferably from 10 to 600 parts by weight, and more preferably from 100 to 500 parts by weight, based on 100 parts by weight of the total amount of the phenol resin and the benzooxazine resin.

In the phenol resin composition of the present invention; thermoplastic and thermosetting resins other than phenol resin can be used in combination.

Examples of the thermoplastic resin include commodity plastics such as polyethylene, polypropylene and polyvinyl chloride; and engineering plastics such as polyamide, ABS resin, polyester, polycarbonate, polyacetal, polyphenylene sulfide, polyphenylene ether, polysulfone, polyethersulfone, polyetherimide and polyether ether ketone.

Examples of the thermosetting resin include benzooxazine resin, epoxy resin, unsaturated polyester, vinyl ester, alkyd resin, silicone resin, diallyl phthalate, bismaleimidetriazine resin, polyimide, urea resin, melamine-containing resin and polyurethane.

To the phenol resin (or the resin containing a phenol resin and a benzooxazine resin) composition of the present invention, there can be optionally added various additives used in a conventional phenol resin composition, for example, releasants or lubricants such as calcium stearate and zinc stearate; hindered phenol-based antioxidants; hindered amine-based photostabilizers; benzotriazole-based ultraviolet absorbers; silane coupling agents such as γ-glycidoxypropyltrimethoxysilane and aminopropyltriethoxysilane; and colorants such as carbon black.

In the present invention, a resin composition containing a phenol resin and a nanoalumina or a resin composition containing a phenol resin, a benzooxazine resin and a nanoalumina can be produced by mixing a phenol resin, a nanoalumina and, if necessary, fillers and additives in a predetermined amount, or mixing a phenol resin, a benzooxazine resin and a nanoalumina in a predetermined amount, optionally mixing fillers and additives, kneading the mixture with heating by a pressure kneader, a twin screw extruder, a Henschel mixer or a mixing heated roll, and grinding or palletizing the kneaded mixture. In the present invention, for the purpose of sufficiently exhibiting physical properties of the resin composition containing the phenol resin, the nanoalumina is uniformly dispersed by adding the nanoalumina to the phenol resin melted previously or mixing the phenol resin with the nanoalumina and melting the mixture. A desired molded article can be produced by molding the phenol resin composition thus obtained using various molding methods such as injection molding, compression molding and transfer molding methods. When a thermosetting resin composition containing a benzooxazine resin as a component is used as a molding material, fillers and additives can be added.

The reason why the phenol resin composition of the present invention exhibits excellent thermal conductivity and mechanical strength is not clear, but is considered to be as follows. That is, the nanoalumina is uniformly dispersed in the resin composition by melt-mixing the phenol resin and the nanoalumina or mixing them with heating, and furthermore a portion of the nanoalumina is chemically bonded with a phenolic hydroxyl group of the phenol resin and, particularly when an alumina-based inorganic filler is mixed, the nanoalumina and alumina exert an interaction capable of serving as a coupling agent.

The reason why the thermosetting resin composition containing a phenol resin, a benzooxazine resin and a nanoalumina of the present invention exhibit excellent thermal conductivity and mechanical strength is not clear, but is considered that the reaction represented by the following scheme (5) arises. 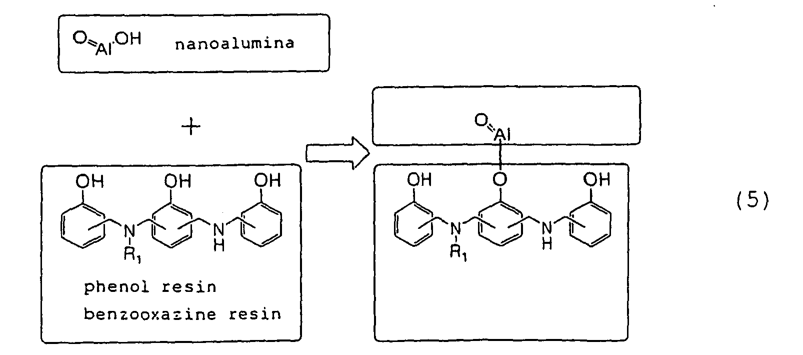 In the general formula (5), R₁ represents an alkyl group which may have a substituent, an aryl group which may have a substituent, an alkenyl group which may have a substituent, an alkynyl group which may have a substituent or an aralkyl group which may have a substituent.

The function of the addition of the benzooxazine resin is considered to be as follows. That is, the nanoalumina is uniformly dispersed in the resin composition by kneading the phenol resin, the benzooxazine resin and the nanoalumina with heating and, as the surface of the nanoalumina has high reactivity, a portion of the nanoalumina is chemically bonded with a phenolic hydroxyl group of the phenol resin and a phenolic hydroxyl group formed by the ring-opening reaction with the benzooxazine resin, and thus the resin composition of the present invention has excellent thermal conductivity and mechanical strength. When using boehmite having a minor diameter of more than 100 nm, the reason is considered to be as follows. That is, although a portion of the boehmite is chemically bonded with a phenolic hydroxyl group of the phenol resin and a phenolic hydroxyl group formed by the ring-opening reaction with the benzooxazine resin, the degree of a chemical bond is lower than that in case of the nanoalumina because of low reactivity.

When an alumina-based inorganic filler is mixed, the reason is considered to be as follows. That is, the nanoalumina and alumina exert an interaction capable of serving as a coupling agent and the phenol resin and the nanoalumina are firmly bonded, and thus a resin composition having excellent mechanical strength is obtained.

### EXAMPLES

The present invention will now be described in detail by way of examples, but the present invention is not limited by the following examples. Performances of the resulting phenol resin composition (or a resin composition containing a phenol resin and a benzooxazine resin) were evaluated according to the following procedures.
(1) Thermal conductivity
   Thermal conductivity was measured by a probe method.
(2) Bending strength, Bend elastic constant
   Bending strength and bend elastic constant were measured according by the method defined in JIS K6911.
(3) Kneading workability
   It was visually confirmed whether or not a resin composition containing a phenol resin and a benzooxazine resin adheres to the surface of a mixing heated roll.
(4) Moldability

It was visually confirmed whether or not the resulting molded article is uniform.

In the following examples, a phenol resin composition comprising a phenol resin and a boehmite having an average particle diameter (minor diameter) of 100 nm or less as a main embodiment of the present invention and a phenol resin composition (thermosetting resin) comprising a phenol resin, a benzooxazine resin and boehmite having an average particle diameter (minor diameter) of 100 nm or less will be described in order.

In Examples 1 to 6, examples of the present invention with respect to a phenol resin composition comprising a phenol resin and boehmite having an average particle diameter (minor diameter) of 100 nm or less will be described. Also the operation and effect obtained by the present invention will be made clear by comparing characteristics obtained by these resin compositions with those obtained by phenol resin compositions of Comparative Examples 1 to 3 which do not satisfy the constitution of the present invention.

In Examples 7 to 14, examples of the present invention with respect to a phenol resin composition (thermosetting resin composition) comprising a phenol resin, a benzooxazine resin and boehmite having an average particle diameter (minor diameter) of 100 nm or less will be described. Also the operation and effect obtained by a resin composition containing a phenol resin and a benzooxazine resin as resin components of the present invention will be made clear by comparing characteristics obtained by these resin compositions with those obtained by phenol resin compositions of Comparative Examples 4 to 8 which do not satisfy the constitution of the present invention.

With respect to the examples and comparative examples, it is necessary to pay attention to the following. Comparative Example 4 corresponds to an "example" of a phenol resin composition comprising a phenol resin and boehmite having an average particle diameter (minor diameter) of 100 nm or less of the present invention, but is referred to a "comparative example" in the sense of comparison with an example further comprising a benzooxazine resin as another aspect of the present invention.

### Example 1

100 Parts by weight of a novolak type phenol resin (CP504 manufactured by Asahi Organic Chemicals Industry Co., Ltd.,) was melted by heating to 180°C and 5.4 parts by weight of boehmite {CAM9010 manufactured by Saint-Gobain K.K., average particle diameter (minor diameter): 10 nm, average particle diameter (major diameter): 90 nm, aspect ratio: 9} was added, followed by melt-mixing for 2 hours. Furthermore, a mixture of 362 parts by weight of alumina (A-21 manufactured by Nippon Light Metal Co., Ltd., average particle diameter: 80 µm) 10 parts by weight of hexamethylenetetramine and 1 part by weight of stearic acid was kneaded with the resulting molten phenol resin by a heated mixing roll and then ground to obtain a phenol resin composition.

The resulting resin composition was compression-molded under molding conditions of a mold temperature of 180°C, a curing time of 15 minutes and a clamping pressure of 5 t to obtain JIS bending specimens (80 × 10 × 4 mm).

Each of the specimens was after-cured at 200°C for 8 hours and then thermal conductivity, bending strength and bend elastic constant were measured. These results are shown in Table 1.

### Example 2

In the same manner as in Example 1, except that the formulation was replaced by that shown in Table 1, a resin composition was produced and specimens were obtained, and then performances were evaluated. The results are shown in Table 1.

### Example 3

A mixture of 100 parts by weight of a novolak type phenol resin (CP504 manufactured by Asahi Organic Chemicals Industry Co., Ltd.), 13.6 parts by weight of boehmite {CAM9010 manufactured by Saint-Gobain K.K., average particle diameter (minor diameter): 10 nm, average particle diameter (major diameter): 90 nm, aspect ratio: 9}, 352 parts by weight of alumina (A-21 manufactured by Nippon Light Metal Co., Ltd., average particle diameter: 80 µm), 10 parts by weight of hexamethylenetetramine and 1 part by weight of stearic acid was kneaded by a mixing heated roll and then ground to obtain a phenol resin composition. In the same manner as in Example 1, specimens were produced and performances were evaluated. The results are shown in Table 1. Examples 4 to 6

In the same manner as in Example 3, except that the formulation was replaced by that shown in Table 1, resin compositions and specimens were obtained and performances were evaluated. The results are shown in Table 1. In the table, CP701K manufactured by Asahi Organic Chemicals Industry Co., Ltd. was used as a benzyl ether type resol resin, SP456A manufactured by Asahi Organic Chemicals Industry Co., Ltd. was used as an ammonia resol resin, and AM-21 manufactured by Sumitomo Chemical Industries Co., Ltd. was used as alumina (average particle diameter: 4 µm).

### Comparative Example 1 to 3

In the same manner as in Example 3, except that the formulation was replaced by that shown in Table 1, resin compositions and specimens were obtained and performances were evaluated. The results are shown in Table 1. In Comparative Example 2, Serasyuru BMB manufactured by Kawai Lime Industry Co., Ltd. {average particle diameter (minor diameter): 1 µm, aspect ratio: 2} was used as boehmite. In Comparative Examples 1 and 3, no boehmite was used. In Comparative Example 3, a chopped strand of ECS03-167S, manufactured by Central Glass Co., Ltd., was used as glass fibers.

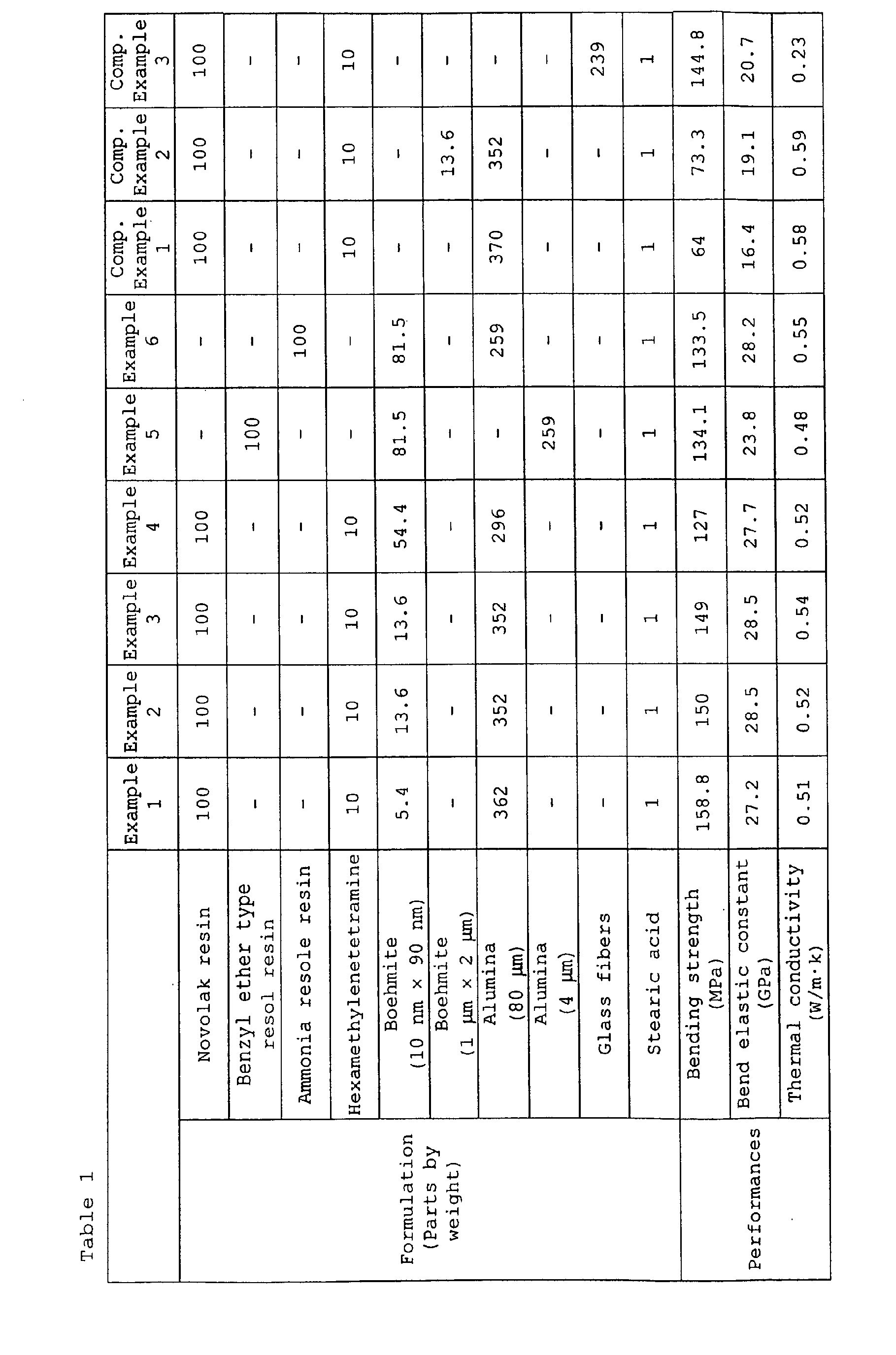

### Example 7

A mixture of 81 parts by weight of a phenol novolak resin (CP506FB manufactured by Asahi Organic Chemicals Industry Co., Ltd.,) 9 parts by weight of hexamethylenetetramine, 10 parts by weight of a benzooxazine resin (F-a type manufactured by Shikoku Corp.), 30 parts by weight of boehmite {CAM9010 by manufactured by Saint-Gobain K.K., average particle diameter (minor diameter): 10 nm, average particle diameter (major diameter): 90 nm, aspect ratio: 9} and 453 parts by weight of alumina (A-21 manufactured by Nippon Light Metal Co., Ltd., average particle diameter: 80 µm) was kneaded by a mixing heated roll and then ground to obtain a thermosetting resin composition.

The resulting resin composition was compression-molded under molding conditions of a mold temperature of 180°C, a curing time of 15 minutes and a clamping pressure of 3.5 t to obtain JIS bending specimens (80 × 10 × 4 mm).

Each of the specimens was after-cured at 180°C for 4 hours and then thermal conductivity, bending strength and bend elastic constant were measured. These results are shown in Table 2.

### Examples 8 to 14

In the same manner as in Example 7, except that the formulation was replaced by that shown in Table 2, a resin composition was produced and specimens were obtained, and then performances were evaluated. The results are shown in Table 2.

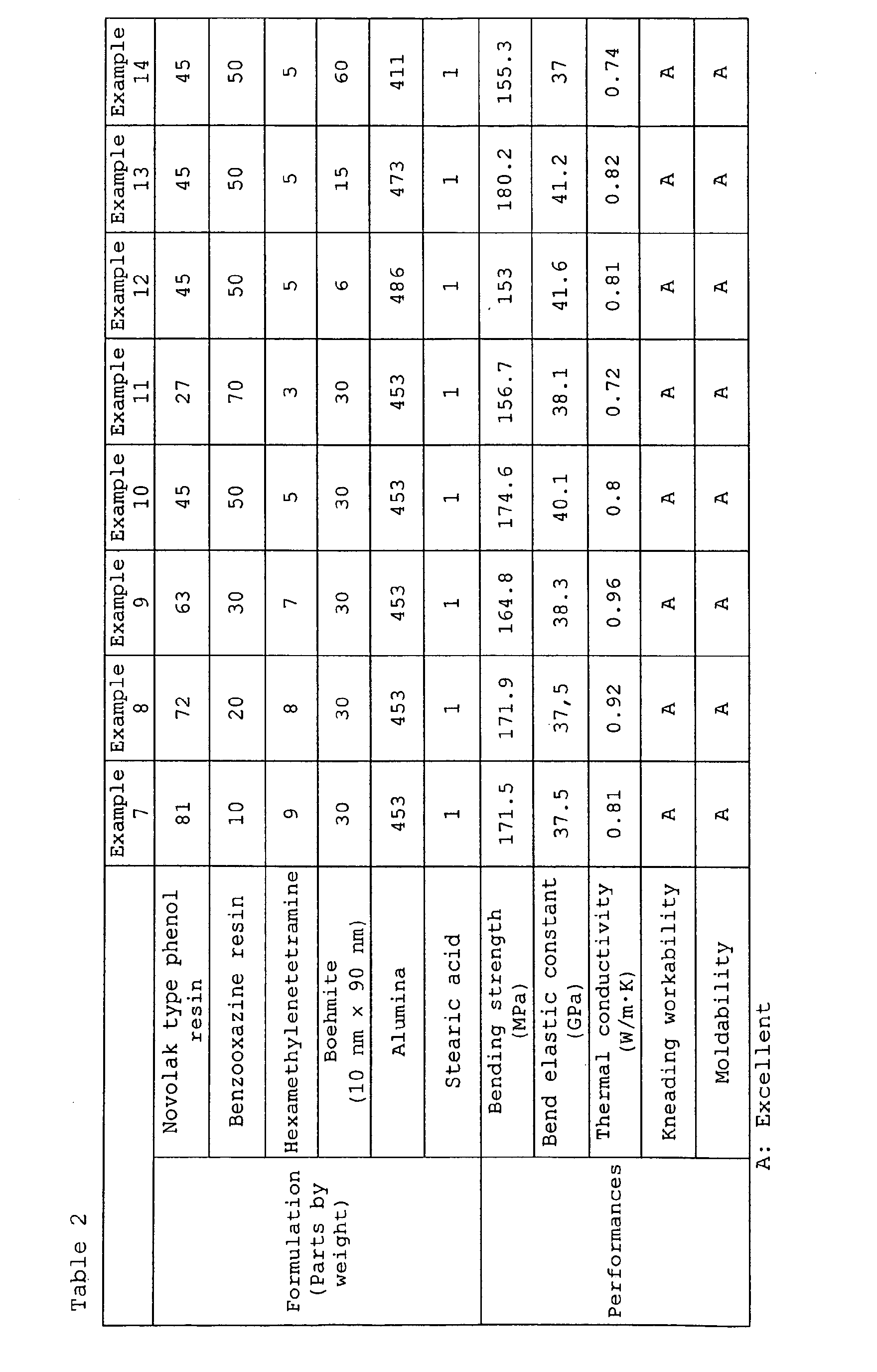

### Comparative Examples 4 to 8

In the same manner as in Example 7, except that the formulation was replaced by that shown in Table 3, a resin composition was produced and specimens were obtained, and then performances were evaluated. The results are shown in Table 3. In Comparative Example 6, Serasyuru BMB manufactured by Kawai Lime Industrial Co., Ltd. {average particle diameter (minor diameter): 1 µm, aspect ratio: 2} was used as boehmite. In Comparative Example 8, a chopped strand of ECS03-167S, manufactured by Central Glass Co., Ltd., was used as glass fibers.

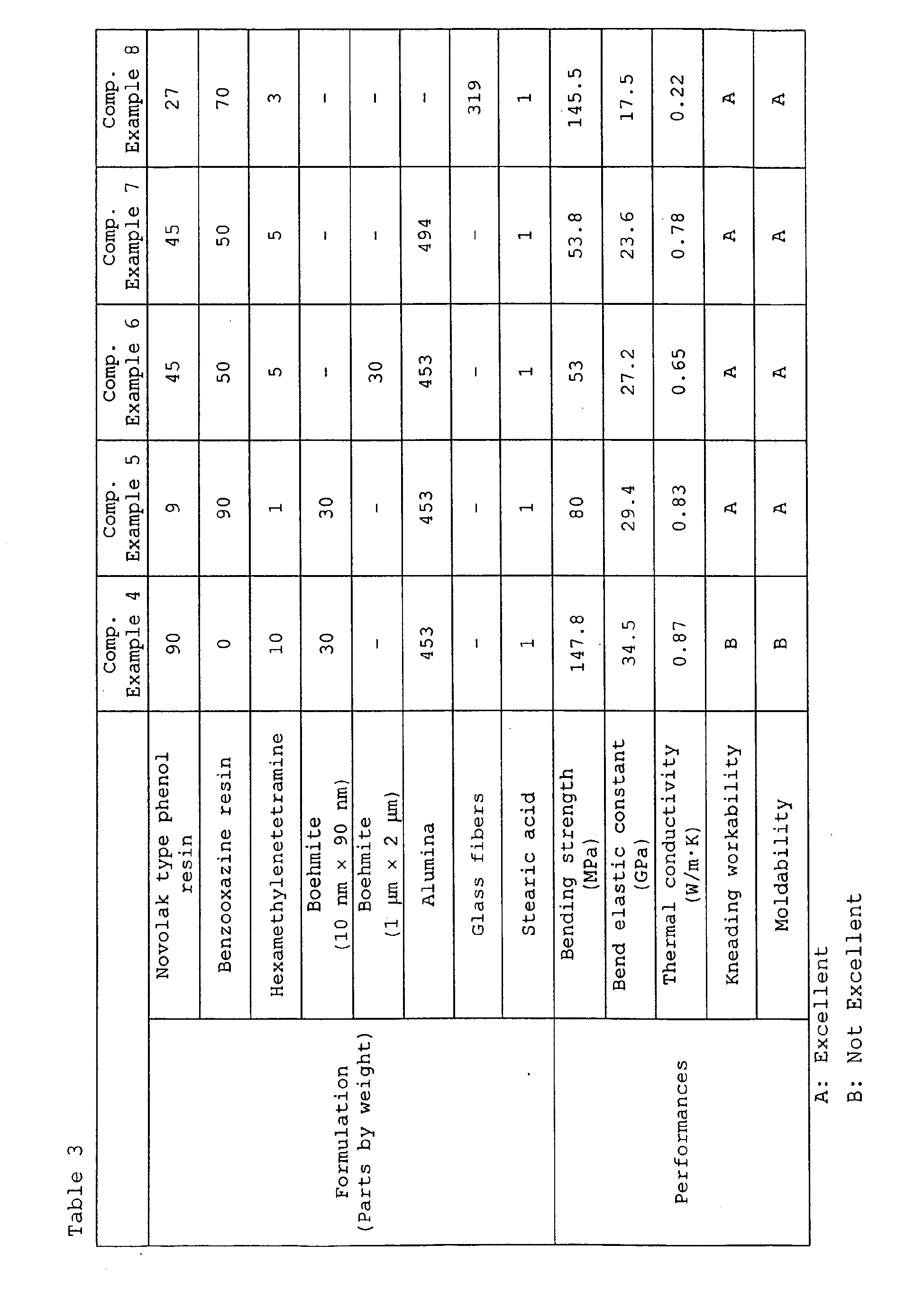

Comparing Example 7 with Comparative Example 4, the resulting resin composition is excellent in kneading workability, moldability and mechanical strength because 10 parts of a benzooxazine resin is added in Example 7, whereas, the resulting resin composition is excellent in mechanical strength but is not excellent in kneading workability and moldability because no benzooxazine resin is added in Comparative Example 4.

Comparing Example 11 with Comparative Example 5, the resulting resin composition is excellent in kneading workability, moldability and mechanical strength because 70 parts of a benzooxazine resin is added in Example 11, whereas, the resulting resin composition is excellent in kneading workability and moldability, but is not excellent in mechanical strength because 90 parts of a benzooxazine resin is added in Comparative Example 5.

Comparing Example 10 with Comparative Example 6, the resulting resin composition is excellent in kneading workability, moldability and mechanical strength because boehmite having an average particle diameter (minor diameter) of 10 nm is used in Example 10, whereas, the resulting resin composition is excellent in kneading workability and moldability, but is not excellent in mechanical strength because boehmite having an average particle diameter (minor diameter) of 1 µm is used in Comparative Example 6.

Comparing Example 10 with Comparative Example 7, the resulting resin composition is excellent in kneading workability, moldability and mechanical strength because boehmite having an average particle diameter (minor diameter) of 10 nm is used in Example 10, whereas, the resulting resin composition is excellent in kneading workability and moldability, but is not excellent in mechanical strength because boehmite is not used in Comparative Example 7.

Comparing Example 11 with Comparative Example 8, the resulting resin composition is excellent in kneading workability, moldability, mechanical strength and thermal conductivity because boehmite having an average particle diameter (minor diameter) of 10 nm is used in Example 11, whereas, the resulting resin composition is excellent in kneading workability, moldability and mechanical strength, but is not excellent in thermal conductivity because glass fibers are used in Comparative Example 8.

### INDUSTRIAL APPLICABILITY

The phenol resin composition of the present invention can be preferably used for mechanical components, laminates and sheet materials, including molding materials for electrical and electronic components such as semiconductor sealing materials as well as molding materials for automobile components.

## Claims

1. A phenol resin composition comprising a phenol resin and boehmite having an average particle diameter (minor diameter) of 100 nm or less.

2. A phenol resin composition comprising a phenol resin and boehmite having an average particle diameter (minor diameter) of 100 nm or less, wherein the boehmite has an aspect ratio of 1 to 100.

3. A phenol resin composition comprising a phenol resin, boehmite having an average particle diameter (minor diameter) of 100 nm or less and an alumina-based compound as a filler.

4. A phenol resin composition comprising a phenol resin, boehmite having an average particle diameter (minor diameter) of 100 nm or less and an alumina-based compound as a filler, wherein the boehmite has an aspect ratio of 1 to 100.

5. A phenol resin composition comprising a phenol resin and boehmite having an average particle diameter (minor diameter) of 100 nm or less, an amount of the boehmite being from 1 to 150 parts based on 100 parts by weight of the phenol resin.

6. A phenol resin composition comprising a phenol resin and boehmite having an average particle diameter (minor diameter) of 100 nm or less, an amount of the boehmite being from 1 to 150 parts based on 100 parts by weight of the phenol resin, the phenol resin composition further comprising an alumina-based compound as a filler.

7. A phenol resin composition comprising a phenol resin and boehmite having an average particle diameter (minor diameter) of 100 nm or less and an aspect ratio of 1 to 100, an amount of the boehmite being from 1 to 150 parts based on 100 parts by weight of the phenol resin.

8. A phenol resin composition comprising a phenol resin and boehmite having an average particle diameter (minor diameter) of 100 nm or less and an aspect ratio of 1 to 100, an amount of the boehmite being from 1 to 150 parts based on 100 parts by weight of the phenol resin, the phenol resin composition further comprising an alumina-based compound as a filler.

9. The phenol resin composition according to any one of claims 1 to 8, which has thermosetting properties.

10. The phenol resin composition according to any one of claims 1 to 4, further comprising a benzooxazine resin in a weight ratio of the phenol resin to the benzooxazine resin within a range from 95/5 to 25/75.

11. The phenol resin composition according to any one of claims 5 to 8, further comprising a benzooxazine resin in a weight ratio of the phenol resin to the benzooxazine resin within a range from 95/5 to 25/75 (provided that the content of the boehmite is within a range from 1 to 150 parts by weight based on 100 parts by weight of the total amount of the phenol resin and the benzooxazine resin).

12. The phenol resin composition according to claim 10, which has thermosetting properties.

13. The phenol resin composition according to claim 11, which has thermosetting properties.
